# EUROPÄISCHE PATENTSCHRIFT

(11) **EP 1 491 285 B1**
(45) Veröffentlichungstag und Bekanntmachung des Hinweises auf die Patenterteilung: **05.11.2008**
(21) Anmeldenummer: 04014931.2
(22) Anmeldetag: 25.06.2004
(51) Int. Cl.: B23P 19/06

(54) **Vorrichtung und Verfahren zum dynamischen Verschrauben von Bauteilen, insbesondere von Lager- und Getriebeeinheiten**
Device and method for dynamically screwing components, in particular for bearing and transmission assemblies
Dispositif et procédé de vissage dynamique des éléments, notamment des unités de paliers et transmission

(30) Priorität: 27.06.2003 DE 10328983
(43) Veröffentlichungstag der Anmeldung: 29.12.2004
(73) Patentinhaber: Klimas, Joachim, 85495 Eurasburg/Rehrosbach (DE)
(72) Erfinder: Klimas, Joachim, 85495 Eurasburg/Rehrosbach (DE)
(74) Vertreter: Manasse, Uwe

(56) Entgegenhaltungen:
- DE-A1- 4 307 131
- DE-U1- 20 110 798
- US-A- 3 596 718

## Beschreibung

Die vorliegende Erfindung betrifft eine Vorrichtung gemäß dem Oberbegriff von Anspruch_1 und ein Verfahren zum dynamischen Verschrauben von Bauteilen, insbesondere von Lagerund Getriebeeinheiten.

Eine Vorrichtung der eingangs genannten Art ist aus der DE 201 10 798 U1 bekannt. Der Verschraubprozeß erfolgt dabei für ein Schraubenverbindungselement (Mutter oder Schraube), das lose angewunden ist, üblicherweise so, daß es bis zur Anlage mit einer fest eingestellten Drehzahl auf- beziehungsweise eingeschraubt wird. Der Endanzug auf das vorgegebene Anziehmoment wird dann mit einer niedrigeren Drehzahl vorgenommen, wobei die Abschaltung des Verschraubantriebes anhand eines von einer zwischengeschalteten Drehmomentmeßwelle gelieferten Signals erfolgt (elektronischer Überlastschutz). Das Umschalten auf die niedrigere Drehzahl wird nach n (fest eingestellt) Umdrehungen vorgenommen. Dieser Verschraubprozeß funktioniert nur dann störungsfrei, wenn
1. die freie Aufschraublänge immer gleich ist,
   oder
2. die zu verschraubende Verbindung eine kleine Federrate aufweist und bei Anlage des Schraubenverbindungselements der Verlauf des Drehmoments entsprechend einer bekannten festen Funktion erfolgt und für das Umschalten der Drehzahl genutzt werden kann.

Diese Voraussetzungen sind häufig nicht gegeben. Dies macht den Verschraubprozeß unsicher.

Der Erfindung liegt somit die Aufgabe zugrunde, eine Vorrichtung und ein Verfahren zum dynamischen Verschrauben von Bauteilen, insbesondere von Lager- und Getriebeeinheiten, bereitzustellen, mit denen der Verschraubprozeß sicherer wird.

Erfindungsgemäß wird diese Aufgabe bei der gattungsgemäßen Vorrichtung dadurch gelöst, daß beide Planetenträger drehbar gelagert sind und daß eine drehmomentgeschaltete Kopplungseinrichtung zur Kopplung des anderen der beiden Planetenträger mit dem Lagerring sowie eine Detektionseinrichtung zur Detektion einer Drehbewegung des anderen der beiden Planetenträger vorgesehen sind, wobei die Kopplungseinrichtung mit einer ansteuerbaren Festsetzeinrichtung zum Festsetzen des anderen der beiden Planetenträger bei Detektion einer Drehbewegung mit einer Drehgeschwindigkeit oberhalb eines vorab festlegbaren Schwellenwertes durch die Detektionseinrichtung als eine Kombinationseinheit ausgebildet ist. Durch die Kopplungseinrichtung alleine kann der andere der beiden Planetenträger, selbst wenn ein bestimmtes Drehmoment erreicht wird, immer noch durchdrehen, d. h. findet noch kein Festsetzen statt. Erst mit dem Festsetzen durch die Festsetzeinrichtung ist kein Durchdrehen des Planetenträgers mehr möglich. Mit Drehbewegung ist jede Bewegung um einen beliebigen Winkel, das heißt auch weniger als eine Umdrehung, gemeint.

Weiterhin wird diese Aufgabe gelöst durch ein Verfahren zum dynamischen Verschrauben von Bauteilen, insbesondere von Lager- und Getriebeeinheiten, unter Verwendung der Vorrichtung nach einem der Ansprüche 1 bis 11, gekennzeichnet durch die folgenden Verfahrensschritte: vor Beginn des Verschraubprozesses werden nur die Sonnenraddrehantriebseinrichtung und die drehmomentgeschaltete Kopplungseinrichtung in Betrieb gesetzt oder in Betrieb gehalten, zu Beginn des Verschraubprozesses wird die Planetenträgerdrehantriebseinrichtung mit einer ersten Drehzahl hinzugeschaltet, bei Detektion einer Drehbewegung mit einer Drehgeschwindigkeit oberhalb eines vorgebbaren Schwellenwertes durch die Detektionseinrichtung wird ein Endanzug der Schraubenverbindung bei einer gegenüber der ersten Drehzahl niedrigeren zweiten Drehzahl der Planetenträgerdrehantriebseinrichtung durchgeführt und im wesentlichen gleichzeitig die Festsetzeinrichtung aktiviert und am Ende des Verschraubprozesses wird die Festsetzeinrichtung deaktiviert und im wesentlichen gleichzeitig die Planetenträgerdrehantriebseinrichtung abgeschaltet. Mit Drehbewegung ist jede Bewegung um einen beliebigen Winkel, das heißt auch weniger als eine Umdrehung, gemeint.

In einer besonderen Ausführungsform der Erfindung weist die Kopplungseinrichtung mindestens ein Reibelement auf.

Vorteilhafterweise ist/sind das beziehungsweise die Reibelement(e) hinsichtlich der Kopplungskraft wählbar einstellbar.

Vorteilhafterweise ist die Detektionseinrichtung zur berührungslosen Detektion einer Drehbewegung gestaltet.

Zweckmäßigerweise weist die Festsetzeinrichtung mindestens ein Bremselement auf.

Insbesondere ist dabei vorteilhafterweise vorgesehen, daß das beziehungsweise die Reibelement(e) gestaltet ist/sind, um auch als Bremselement beziehungsweise Bremselemente der Festsetzeinrichtung einsetzbar zu sein.

Günstigerweise ist eine Schraubmomentmeßeinrichtung zur Messung eines Schraubmoments direkt am zu verschraubenden Bauteil vorgesehen. Dies ist genauer als im Stand der Technik, in dem das Antriebsmoment an der Planetenträgerdrehantriebseinrichtung mit einer Drehmoment-Meßwelle gemessen wird und unter Berücksichtigung eines Übersetzungsverhältnisses und eines Wirkungsgrades des Getriebes umgerechnet wird.

Vorteilhafterweise ist eine Lagerreibmomentmeßeinrichtung zur Messung des Reibmomentes der Lagerung des Bauteils vorgesehen, die direkt oder indirekt am Schlitten befestigt ist. Beispielsweise kann die Lagerreibmomentmeßeinrichtung an einem Gehäuse für das Drehzahl-Überlagerungsgetriebe befestigt sein. Dadurch bildet die Lagerreibmomentmeßeinrichtung damit eine Einheit. Es gibt aber auch Anwendungsfälle, wo die Lagerreibmomentmeßeinrichtung nicht am Bauteil befestigt werden kann, sondern sich lediglich an einer Außenkontur des Bauteils abstützt. Im Stand der Technik wird dagegen eine Lagerreibmomentmeßeinrichtung auf einem separaten Schlitten angeordnet und muß sie separat montiert und ausgerichtet werden.

Eine weitere besondere Ausführungsform der Erfindung zeichnet sich dadurch aus, dass eine Steuereinrichtung vorgesehen ist, die zum Betrieb der Vorrichtung gestaltet ist derart, dass vor Beginn eines Verschraubprozesses nur die Sonnenraddrehantriebseinrichtung und die Kopplungseinrichtung in Betrieb sind, zu Beginn des Verschraubprozesses die Planetenträgerdrehantriebseinrichtung mit einer ersten Drehzahl hinzugeschaltet wird, bei Detektion einer Drehbewegung mit einer Drehgeschwindigkeit oberhalb eines vorgebbaren Schwellenwertes durch die Detektionseinrichtung die Drehzahl der Planetenträgerdrehantriebseinrichtung auf eine gegenüber der ersten Drehzahl niedrigere zweite Drehzahl für den Endanzug des Schraubenverbindungselements abgesenkt und im wesentlichen gleichzeitig die Festsetzeinrichtung aktiviert wird sowie am Ende des Verschraubprozesses die Festsetzeinrichtung deaktiviert und im wesentlichen gleichzeitig die Planetenträgerdrehantriebseinrichtung abgeschaltet wird. Mit Drehbewegung ist jede Bewegung um einen beliebigen Winkel, das heißt auch weniger als eine Umdrehung, gemeint.

Beispielsweise kann die Planetenträgerdrehantriebseinrichtung entsprechend einer Stufenfunktion abgeschaltet werden. Die Stufenfunktion kann dabei eine oder mehrere Stufen umfassen. Es ist auch denkbar, dass die Planetenträgerdrehantriebseinrichtung zunächst einmal auf eine geringere Geschwindigkeit geschaltet und dann ganz abgeschaltet wird.

Gemäß einer weiteren besonderen Ausführungsform der Erfindung kann vorgesehen sein, dass die Planetenträgerdrehantriebseinrichtung entsprechend einer stetigen Funktion abgeschaltet wird. Beispielsweise kann die Planetenträgerdrehantriebseinrichtung entsprechend einer linearen oder Exponentialfunktion auf Null geregelt werden.

Auch kann bei dem Verfahren vorgesehen sein, dass die Planetenträgerdrehantriebseinrichtung entsprechend einer Stufenfunktion abgeschaltet wird.

Andererseits ist auch denkbar, dass die Planetenträgerdrehantriebseinrichtung entsprechend einer stetigen Funktion abgeschaltet wird.

Ferner kann bei dem Verfahren vorgesehen sein, dass am Ende des Verschraubprozesses die Festsetzeinrichtung nach einer vorgebbaren Zeit oder bei Erreichen eines bestimmten Anziehmoments deaktiviert wird.

Günstigerweise wird ein Schraubmoment direkt am zu verschraubenden Bauteil gemessen.

Ebenfalls zweckmäßigerweise wird ein Lagerreibmoment mittels einer direkt oder indirekt befestigten Lagerreibmomentmeßeinrichtung gemessen.

Vorteilhafterweise wird das Verfahren automatisch ausgeführt.

Der Erfindung liegt die überraschende Erkenntnis zugrunde, daß der Verschraubprozeß sicherer wird, indem zwischen dem anfänglichen Anschrauben mit einer ersten Drehzahl und dem Endanzug mit einer gegenüber der ersten Drehzahl niedrigeren zweiten Drehzahl ein temporäres Sicherheitskuppeln vorgesehen ist. Darüber hinaus lassen sich dadurch auch die Bauteile vor Beschädigung und die Antriebseinrichtungen vor Überlast oder sogar Zerstörung schützen.

Ferner bietet der erfindungsgemäße mechanische Überlastschutz den Vorteil, daß durch die möglichen hohen Anfangsschraubgeschwindigkeiten höhere Schraubraten möglich sind. Der mechanische Überlastschutz bietet gegenüber einem elektronischen Überlastschutz zudem eine einfachere Regelung des Verschraubprozesses.

Weitere Merkmale und Vorteile der Erfindung ergeben sich aus den Ansprüchen und aus der nachstehenden Beschreibung, in der Ausführungsbeispiele anhand der schematischen Zeichnungen im einzelnen erläutert sind. Dabei zeigt:
Fig. 1 eine Vertikalschnittansicht eines Teils einer Vorrichtung gemäß einer besonderen Ausführungsform der vorliegenden Erfindung;
Fig. 2 eine Vertikalschnittansicht eines unteren Teils einer Vorrichtung gemäß einer weiteren besonderen Ausführungsform der vorliegenden Erfindung;
Fig. 3 eine Vertikalschnittansicht (oben) und eine Draufsicht (unten) eines unteren Teils einer Vorrichtung gemäß einer weiteren besonderen Ausführungsform der vorliegenden Erfindung; und
Fig. 4 eine Vertikalschnittansicht (oben) und eine Draufsicht (unten) eines unteren Teils einer Vorrichtung gemäß einer weiteren besonderen Ausführungsform der vorliegenden Erfindung.

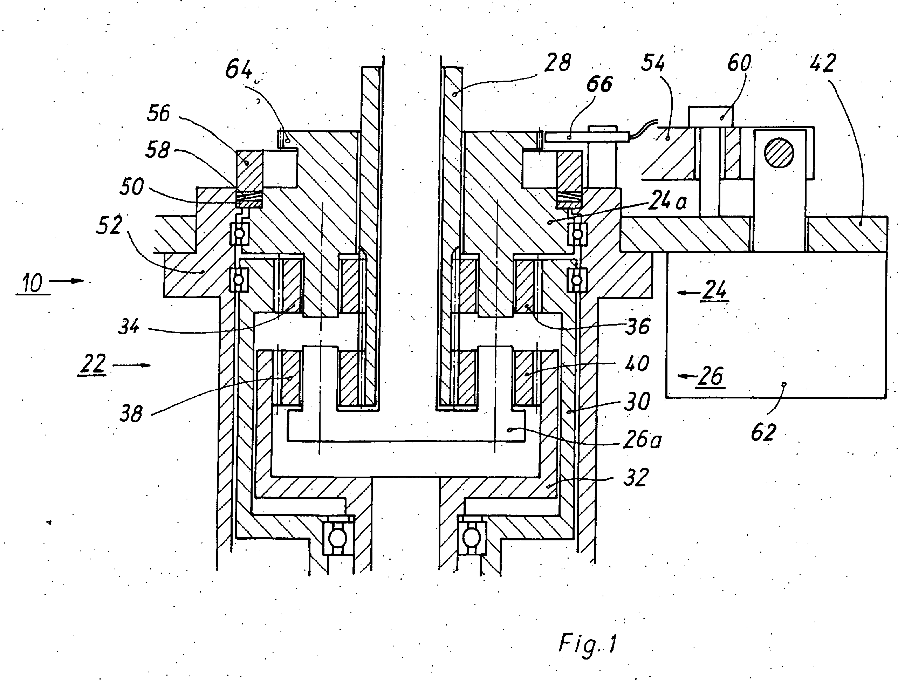

Die in Fig. 1 gezeigte Vorrichtung 10 weist ein Drehzahl-Überlagerungsgetriebe 22 auf, das aus zwei hintereinander angeordneten Planetengetrieben 24 und 26 mit einem gemeinsamen Sonnenrad 28 und zueinander koaxialen Abtrieben in Form von Stegrädern 30 und 32 besteht. Jedes der Planetengetriebe 24 und 26 weist drei Planetenräder auf, von denen lediglich die Planetenräder 34 und 36 sowie 38 und 40 zu sehen sind. Jedes der Planetengetriebe 24 und 26 weist zudem einen drehbar gelagerten Planetenträger 24a beziehungsweise 26a auf. Das Sonnenrad 28 ist über eine ansteuerbare Sonnenraddrehantriebseinrichtung (nicht gezeigt) und der Planetenträger 26a ist über eine ansteuerbaren Planetenträgerdrehantriebseinrichtung (nicht gezeigt) antreibbar. Die Sonnenraddrehantriebseinrichtung, die Planetenträgerdrehantriebseinrichtung und das Drehzahl-Überlagerungsgetriebe 22 sind auf einem verfahrbaren Schlitten 42 angeordnet.

Weiterhin weist die Vorrichtung 10 eine drehmomentgeschaltete Kopplungseinrichtung zur Kopplung des Planetenträgers 24a mit einem Lagerring 52 auf. Besagte Kopplungseinrichtung weist eine Scheibe 50 aus gehärtetem Stahl als Reibelement auf, die zwischen dem Planetenträger 24a und dem Lagerring 52 angeordnet ist. Das Reibmoment wird durch Andruck der Scheibe 50 zwischen dem Planetenträger 24a und dem Lagerring 52 erzeugt. Die erforderliche Druckkraft wird von einer Wippe 54 auf einen Druckring 56 übertragen, der über ein Spannelement 58, das bei geringer Kraft als Feder wirkt, die Kraft auf die Scheibe 50 überträgt. Die Wippe 54 wird mittels einer Vorspannmutter 60 eingestellt. Die Lagerung der Wippe 54 ist nicht gezeigt.

Die Kopplungseinrichtung dient gleichzeitig als ansteuerbare Festsetzeinrichtung zum Festsetzen des Planetenträgers 24a. Dazu umfaßt sie einen Pneumatikzylinder 62. Über den Pneumatikzylinder 62 wird eine Spannkraft erzeugt und durch das Übersetzungsverhältnis der Wippe 54 auf die erforderliche Betätigungskraft des Spannelements 58 erhöht. Besagtes Spannelement 58 verbindet kraftschlüssig den Lagerring 52 mit dem Planetenträger 24a.

In der hier dargestellten Ausführungsform besteht somit die Kopplungseinrichtung aus der Scheibe 50, dem Druckring 56, dem Spannelement 58 und der Wippe 54, wobei das Spannelement 58 gleichzeitig zur Festsetzeinrichtung gehört.

Die Vorrichtung umfaßt außerdem eine Detektionseinrichtung zur Detektion einer Drehbewegung des Planetenträgers 24a. Dazu umfaßt die Detektionseinrichtung eine Zahnscheibe 64 am Planetenträger 24a und einen Sensor 66 zur Erfassung der Drehbewegung.

Die oben beschriebene Vorrichtung läßt sich mittels einer Steuereinrichtung (nicht gezeigt) wie folgt betreiben:
Vor Beginn eines Verschraubprozesses sind nur die Sonnenraddrehantriebseinrichtung und die Einrichtung zur Bildung einer drehmomentgeschalteten Kupplung in Betrieb. Dadurch dreht sich das Sonnenrad 28 bei ruhendem Planetenträger 26a und gebremstem Planetenträger 24a und laufen die Stegräder 30 und 32 synchron, d. h., dass keine Schraubbewegung zum Verschrauben der Bauteile stattfindet.

Zu Beginn des Verschraubprozesses wird die Planetenträgerdrehantriebseinrichtung mit einer ersten Drehzahl in gleichem oder entgegengesetzten Drehsinn bzgl. der Sonnenraddrehantriebseinrichtung hinzugeschaltet. Dadurch dreht sich dann auch der Planetenträger 26a, während der Planetenträger 24a weiterhin gebremst bleibt. Dies hat zur Folge, dass die Stegräder 30 und 32 nicht mehr synchron laufen und somit eine Schraubbewegung, d. h. ein Schraubmoment zum Verschrauben der Bauteile entsteht. Bei Erreichen eines Haltemomentes blockiert das Stegrad 30. Es erfolgt somit keine Schraubbewegung mehr. Dies bedeutet nichts anderes, dass das Stegrad 30 von dem Stegrad 32 wieder zum Synchronlaufen gezwungen wird, wodurch eine Reaktion über die Planetenräder 34 und 36 auf den Planetenträger 24a in der Form erfolgt, daß der Planetenträger 24a in der von der Einrichtung zur Bildung einer drehmomentgeschalteten Kupplung gebildeten Rutschkupplung durchrutscht. Dies bedeutet, daß der Planetenträger 24a eine Drehbewegung durchführt. Letztere wird wiederum von dem Sensor 66 erfaßt. Der Sensor 66 liefert ein entsprechendes Signal an die Steuereinrichtung, die daraufhin die Drehzahl der Planetenträgerdrehantriebseinrichtung auf eine niedrigere zweite Drehzahl für den Endanzug des Schraubenverbindungselements absenkt und im wesentlichen gleichzeitig die Festsetzeinrichtung aktiviert, das heißt das Spannelement 58 verbindet den Lagerring 52 und den Planetenträger 24a kraftschlüssig. Das Spannelement 58 übt beim Flachdrücken sehr große Radialkräfte auf den Innen- und Außendurchmesser aus. Bei niedrigem Reibmoment wirkt das Spannelement 58 als Tellerfeder und drückt die Scheibe 50 gegen die Fläche an dem Planetenträger 24a. Es kann dann das volle Schraubmoment für den Endanzug übertragen werden. Der Endanzug wird dabei grundsätzlich entweder nach dem Anziehmoment oder nach dem Reibmoment der Lagerung begrenzt. Die dazu erforderlichen Meßeinrichtungen werden von der Steuereinrichtung ausgewertet. Am Ende des Verschraubprozesses wird die Festsetzeinrichtung deaktiviert und im wesentlichen gleichzeitig die Planetenträgerdrehantriebseinrichtung abgeschaltet.

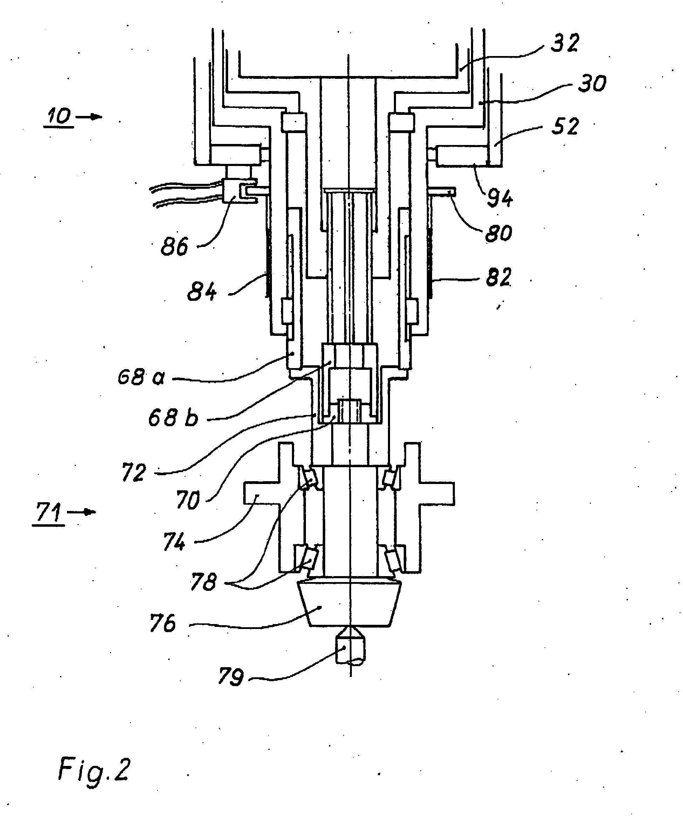

Fig. 2 zeigt den unteren, d. h. zu einem Bauteil 71 gewandten Teil einer Vorrichtung 10 zum dynamischen Verschrauben von Bauteilen gemäß einer besonderen Ausführungsform der Erfindung, die mit einer Schraubmomentmeßeinrichtung zum Messen des Schraubmoments direkt an einem zu verschraubenden Bauteil 71 versehen ist. Das Bauteil 71 ist eine Lagereinheit und umfasst einen Antriebsflansch 72, ein Bauteil-Außenteil 74, eine Welle 76 und eine Lagerung 78 in Form von zwei Kegelrollenlagern. Eine Spitze 79 ist als Gegenlager für das Bauteil 71 vorgesehen. Das zu verschraubende Bauteil 71 wird mittels eines Werkzeugträgers (nicht gezeigt) in die Vorrichtung 10 transportiert und unter ein Schraubwerkzeug-Innenteil 68b positioniert. Der in Fig. 1 gezeigte Schlitten 42 senkt ab und das Schraubwerkzeug-Innenteil 68b (Abtrieb des Planetengetriebes 26) setzt auf ein Schraubenelement, hier Bundmutter 70 auf, während ein mit dem Stegrad 30 in Verbindung stehendes Schraubwerkzeug-Außenteil 68a auf den Antriebsflansch 72 aufsetzt und eine drehfeste Verbindung mit diesem herstellt.

Die Schraubmomentmeßeinrichtung umfasst mindestens vier Dehnungsmeßstreifen, von denen hier nur zwei sichtbar und mit den Bezugszeichen 82 und 84 gekennzeichnet sind, zur Messung der Verformung (Torsion) des Stegrades 30 sowie einen koaxial zum Stegrad 30 umlaufenden Schleifring 80 zur Erfassung von Schraubmomentmeßsignalen von den Dehnungsmeßstreifen und einen Lesekopf 86 zur Weiterleitung und Verstärkung von Schraubmomentmeßsignalen. Dadurch kann das jeweilige Schraubmoment direkt am Bauteil 71 gemessen werden.

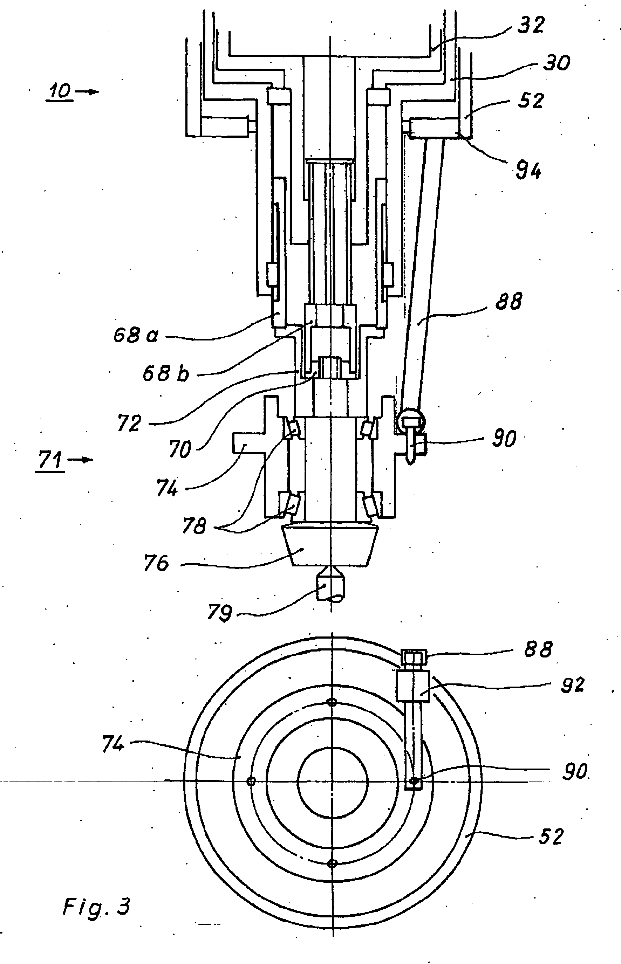

Fig. 3 zeigt den unteren, d. h. zu einem Bauteil 71 gewandten Teil einer Vorrichtung 10 zum dynamischen Verschrauben von Bauteilen gemäß einer weiteren besonderen Ausführungsform der Erfindung mit einer Lagerreibmomentmeßeinrichtung, die am in Fig. 1 gezeigten Schlitten 42 über den Lagerring 52 befestigt ist.

Das Bauteil 71 ist genau wie in Fig. 2 aufgebaut. Durch die Drehbewegung wird von der Lagerung 78 in Form von zwei Kegelrollenlagern ein Lagerreibmoment erzeugt, dass das Bauteil-Außenteil 74 in Rotation versetzen würde. Um dies zu verhindern, ist in eine nicht gekennzeichnete Flanschbohrung des Bauteil-Außenteils 74 mittels eines Stiftes 90 eine Stütze 88 angebracht. Die Stütze 88 erstreckt sich vom Bauteil-Außenteil 74 schräg nach oben zu einem Lagerarm 94 für den Lagerring 52 und ist daran auf beliebige Weise befestigt. Wie sich aus der unteren Zeichnung in Fig. 3 ergibt, ist in der Stütze 88 eine Kraftmeßdose 92 integriert. Die Kraftmeßdose 92 dient zur Messung der anliegenden Abstützkraft. Das Lagerreibmoment M_{R} ergibt sich aus dem Produkt der Tangentialkraft E am Anlenkpunkt der Stütze 88 am Lagerarm 94 und dem Radius r, d. h. der Entfernung zwischen der Drehachse des Bauteils 71 und dem Stift 90. Die Anordnung der Stütze 88 (Abstützung) ist vom jeweiligen Bauteil abhängig und kann z. B. in Form einer Zug- bzw. Druckstange ausgeführt sein. In jedem Fall ist die Stütze 88 mit dem Bauteil 71 und dem Lagerring 52 verbunden.

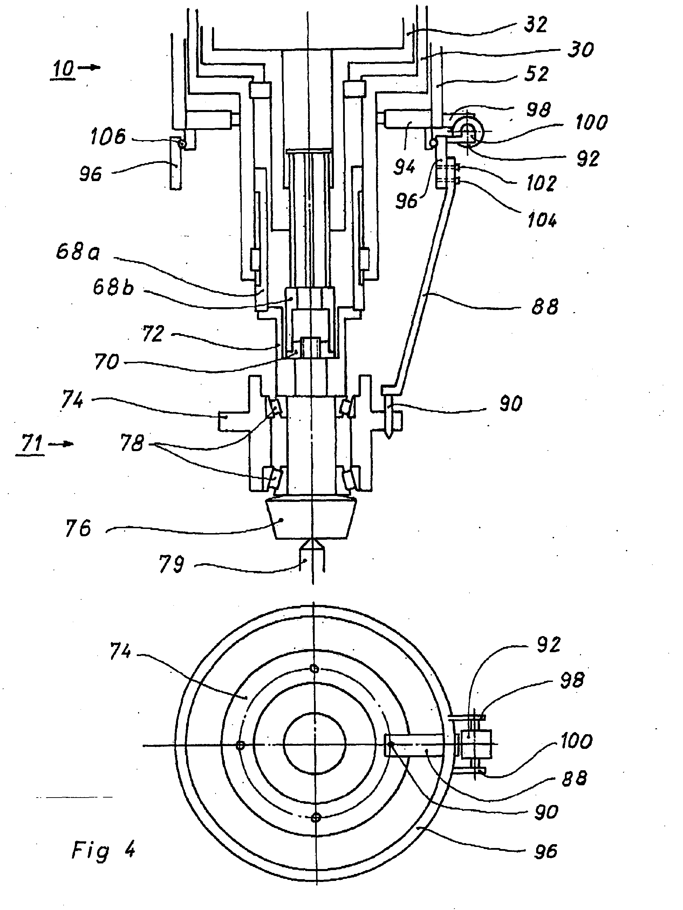

In Fig. 4 ist eine Variante der in Fig. 3 gezeigten Lagerreibmomentmeßeinrichtung gezeigt. Die Lagerreibmomentmeßeinrichtung umfasst eine Stütze 88, die mit ihrem einen Ende mittels eines Stiftes 90 am Bauteil-Außenteil 74 befestigt ist und sich nach schräg nach oben erstreckend mit ihrem anderen Ende mittels zweier Schrauben 102 und 104 an einem koaxial zum Stegrad 30 umlaufenden Ring 96 verbunden ist, der wiederum über einen Haltearm 100 mit einer Kraftmeßdose 92 verbunden ist, die wiederum über einen Haltearm 98 mit dem Lagerring 52 verbunden ist. Der Ring 96 ist darüber hinaus am Lagerring 52 mittels einer Lagerung 106 angeordnet. Über die Kraftmeßdose 92 wird wiederum das Abstützmoment gemessen. Bei dieser Variante einer Lagerreibmomentmeßeinrichtung kann die Abstützung leichter als bei der Fig. 3 gezeigten Ausführung an unterschiedliche Bauteile angepasst werden.

### Bezugszeichenliste

- 10: Vorrichtung
- 22: Drehzahl-Überlagerungsgetriebe
- 24, 26: Planetengetriebe
- 24a: Planetenträger
- 26a: Planetenträger
- 28: Sonnenrad
- 30, 32: Stegräder
- 34, 36, 38, 40: Planetenräder
- 42: Schlitten
- 50: Scheibe
- 52: Lagerring
- 54: Wippe
- 56: Druckring
- 58: Spannelement
- 60: Vorspannmutter
- 62: Pneumatikzylinder
- 64: Zahnscheibe
- 66: Sensor
- 68a: Schraubwerkzeug-Außenteil
- 68b: Schraubwerkzeug-Innenteil
- 70: Bundmutter
- 71: Bauteil
- 72: Antriebsflansch
- 74: Bauteil-Außenteil
- 76: Welle
- 78: Lagerung
- 79: Spitze
- 80: Schleifring
- 82, 84: Dehnungsmeßstreifen
- 86: Lesekopf
- 88: Stütze
- 90: Stift
- 92: Kraftmeßdose
- 94: Lagerarm
- 96: Ring
- 98: Haltearm
- 100: Haltearm
- 102, 104: Schrauben
- 106: Lagerung

## Patentansprüche

1. Vorrrichtung (10) zum dynamischen Verschrauben von Bauteilen, insbesondere von Lager- und Getriebeeinheiten, mit einem Drehzahl-Überlagerungsgetriebe (22) zum Drehenlassen eines Schraubenverbindungselements und eines damit zu verschraubenden Teils eines Bauteils mit unterschiedlichen Drehzahlen, das zwei hintereinander angeordnete Planetengetriebe (24, 26) mit einem jeweiligen Planetenträger (24a, 26a) und jeweiligen Planetenrädern (34, 36; 38 40) sowie mit einem gemeinsamen Sonnenrad (28) umfaßt, einer ansteuerbaren Sonnenraddrehantriebseinrichtung und einer ansteuerbaren Planetenträgerdrehantriebseinrichtung zum Drehen eines der beiden Planetenträger (24a bzw. 26a), wobei die Sonnenraddrehantriebseinrichtung, die Planetenträgerdrehantriebseinrichtung und das Drehzahl-Überlagerungsgetriebe (22) auf einem verfahrbaren Schlitten (42) mit einem Lagerring (52) angeordnet sind,
**dadurch gekennzeichnet,**
**daß** beide Planetenträger (24a, 26a) drehbar gelagert sind und dass
eine drehmomentgeschaltete Kopplungseinrichtung zur Kopplung des anderen (24a oder 26a) der beiden Planetenträger mit dem Lagerring (52) sowie eine Detektionseinrichtung zur Detektion einer Drehbewegung des anderen (24a oder 26a) der beiden Planetenträger vorgesehen sind, wobei die Kopplungseinrichtung mit einer ansteuerbaren Festsetzeinrichtung zum Festsetzen des anderen (24a oder 26a) der beiden Planetenträger bei Detektion einer Drehbewegung mit einer Drehgeschwindigkeit oberhalb eines vorab festlegbaren Schwellenwertes durch die Detektionseinrichtung als eine Kombinationseinheit ausgebildet ist.

2. Vorrichtung nach Anspruch 1, **dadurch gekennzeichnet, daß** die Kopplungseinrichtung mindestens ein Reibelement aufweist.

3. Vorrichtung nach Anspruch 2, **dadurch gekennzeichnet, daß** das beziehungsweise die Reibelement(e) hinsichtlich der Kopplungskraft wählbar einstellbar ist/sind.

4. Vorrichtung nach einem der vorangehenden Ansprüche, **dadurch gekennzeichnet, daß** die Detektionseinrichtung zur berührungslosen Detektion einer Drehbewegung gestaltet ist.

5. Vorrichtung nach einem der vorangehenden Ansprüche, **dadurch gekennzeichnet, daß** die Festsetzeinrichtung mindestens ein Bremselement aufweist.

6. Vorrichtung nach Anspruch 5, **dadurch gekennzeichnet, daß** das beziehungsweise die Reibelemente gestaltet ist/sind, um auch als Bremselement beziehungsweise Bremselemente der Festsetzeinrichtung einsetzbar zu sein.

7. Vorrichtung nach einem der vorangehenden Ansprüche, **dadurch gekennzeichnet, dass** eine Schraubmomentmeßeinrichtung zur Messung eines Schraubmoments direkt am zu verschraubenden Bauteil vorgesehen ist.

8. Vorrichtung nach einem der vorangehenden Ansprüche, **dadurch gekennzeichnet, dass** eine Lagerreibmomentmeßeinrichtung zur Messung des Reibmomentes der Lagerung des Bauteils vorgesehen ist, die direkt oder indirekt am Schlitten (42) befestigt ist.

9. Vorrichtung nach einem der vorangehenden Ansprüche, **dadurch gekennzeichnet, daß** eine Steuereinrichtung vorgesehen ist, die zum Betrieb der Vorrichtung gestaltet ist derart, daß vor Beginn eines Verschraubprozesses nur die Sonnenraddrehantriebseinrichtung und die Kopplungseinrichtung in Betrieb sind, zu Beginn des Verschraubprozesses die Planetenträgerdrehantriebseinrichtung mit einer ersten Drehzahl hinzugeschaltet wird, bei Detektion einer Drehbewegung mit einer Drehgeschwindigkeit oberhalb eines vorgebbaren Schwellenwertes durch die Detektionseinrichtung die Drehzahl der Planetenträgerdrehantriebseinrichtung auf eine gegenüber der ersten Drehzahl niedrigere zweite Drehzahl für den Endanzug des Schraubenverbindungselements abgesenkt und im wesentlichen gleichzeitig die Festsetzeinrichtung aktiviert wird sowie am Ende des Verschraubprozesses die Festsetzeinrichtung deaktiviert und im wesentlichen gleichzeitig die Planetenträgerdrehantriebseinrichtung abgeschaltet wird.

10. Vorrichtung nach Anspruch 9, **dadurch gekennzeichnet, dass** die Planetenträgerdrehantriebseinrichtung entsprechend einer Stufenfunktion abgeschaltet wird.

11. Vorrichtung nach Anspruch 9, **dadurch gekennzeichnet, dass** die Planetenträgerdrehantriebseinrichtung entsprechend einer stetigen Funktion abgeschaltet wird.

12. Verfahren zum dynamischen Verschrauben von Bauteilen, insbesondere von Lager- und Getriebeeinheiten, unter Verwendung der Vorrichtung nach einem der Ansprüche 1 bis 11, **gekennzeichnet durch** die folgenden Verfahrensschritte:
- vor Beginn des Verschraubprozesses werden nur die Sonnenraddrehantriebseinrichtung und die drehmomentgeschaltete Kopplungseinrichtung in Betrieb gesetzt oder in Betrieb gehalten,
- zu Beginn des Verschraubprozesses wird die Planetenträgerdrehantriebseinrichtung mit einer ersten Drehzahl hinzugeschaltet,
- bei Detektion einer Drehbewegung mit einer Drehgeschwindigkeit oberhalb eines vorgebbaren Schwellenwertes **durch** die Detektionseinrichtung wird ein Endanzug der Schraubenverbindung bei einer gegenüber der ersten Drehzahl niedrigeren zweiten Drehzahl der Planetenträgerdrehantriebseinrichtung durchgeführt und im wesentlichen gleichzeitig die Festsetzeinrichtung aktiviert und
- am Ende des Verschraubprozesses wird die Festsetzeinrichtung deaktiviert und im wesentlichen gleichzeitig die Planetenträgerdrehantriebseinrichtung abgeschaltet.

13. Verfahren nach Anspruch 12, **dadurch gekennzeichnet, dass** die Planetenträgerdrehantriebseinrichtung entsprechend einer Stufenfunktion abgeschaltet wird.

14. Verfahren nach Anspruch 12, **dadurch gekennzeichnet, dass** die Planetenträgerdrehantriebseinrichtung entsprechend einer stetigen Funktion abgeschaltet wird.

15. Verfahren nach einem der Ansprüche 12 bis 14, **dadurch gekennzeichnet, dass** am Ende des Verschraubprozesses die Festsetzeinrichtung nach einer vorgebbaren Zeit oder bei Erreichen eines bestimmten Anziehmoments deaktiviert wird.

16. Verfahren nach einem der Ansprüche 12 bis 15, **dadurch gekennzeichnet, dass** ein Schraubmoment direkt am zu verschraubenden Bauteil gemessen wird.

17. Verfahren nach einem der Ansprüche 12 bis 16, **dadurch gekennzeichnet, dass** ein Lagerreibmoment mittels einer direkt oder indirekt am Schlitten befestigten Lagerreibmomentmeßeinrichtung gemessen wird.

18. Verfahren nach Anspruch 12 bis 17, **dadurch gekennzeichnet, dass** es automatisch ausgeführt wird.

## Claims

1. Device (10) for dynamically screwing components, in particular of bearing and transmission units, having a rotational speed superposition gearing (22) for rotating a screw connecting element, and a part, which is to be screwed thereto, of a component, at different rotational speeds, which rotational speed superposition gearing (22) comprises two planetary gear sets (24, 26) which are arranged in series and which have a respective planet carrier (24a, 26a) and respective planet gears (34, 36; 38, 40) and which also have a common sun gear (28), an actuable sun gear rotary drive device and an actuable planet carrier rotary drive device for rotating one of the two planet carriers (24a or 26a), with the sun gear rotary drive device, the planet carrier rotary drive device and the rotational speed superposition gearing (22) being arranged on a movable carriage (42) with a bearing ring (52),
**characterized**
**in that** the two planet carriers (24a, 26a) are rotatably mounted, and in that
a torque-switched coupling device for coupling the other (24a or 26a) of the two planet carriers to the bearing ring (52) and a detection device for detecting a rotational movement of the other (24a or 26a) of the two planet carriers are provided, with the coupling device being formed as a combined unit with an actuable arresting device for arresting the other (24a or 26a) of the two planet carriers in the event of the detection device detecting a rotary movement with a rotational speed above a predefinable threshold value.

2. Device according to Claim 1, **characterized in that** the coupling device has at least one friction element.

3. Device according to Claim 2, **characterized in that** the friction element(s) is/are selectively adjustable with regard to the coupling force.

4. Device according to one of the preceding claims, **characterized in that** the detection device is designed for the non-contact detection of a rotational movement.

5. Device according to one of the preceding claims, **characterized in that** the arresting device has at least one brake element.

6. Device according to Claim 5, **characterized in that** the friction element(s) is/are designed such that it/they may also be used as a brake element or brake elements of the arresting device.

7. Device according to one of the preceding claims, **characterized in that** a screw torque measuring device for measuring a screw torque is provided directly on the component which is to be screwed.

8. Device according to one of the preceding claims, **characterized in that** a bearing friction torque measuring device for measuring the friction torque of the bearing arrangement of the component is provided, which bearing friction torque measuring device is fastened directly or indirectly to the carriage (42).

9. Device according to one of the preceding claims, **characterized in that** a control device is provided which is designed so as to operate the device in such a way that, before the start of a screwing process, only the sun gear rotary drive device and the coupling device are in operation; at the start of the screwing process, the planet carrier rotary drive device is activated with a first rotational speed, and in the event of the detection device detecting a rotational movement with a rotational speed above a predefinable threshold value, the rotational speed of the planet carrier rotary drive device is reduced to a second rotational speed, which is lower than the first rotational speed, for the final tightening of the screw connecting element, and the arresting device is activated substantially at the same time; and at the end of the screwing process, the arresting device is deactivated and the planet carrier rotary drive device is switched off substantially at the same time.

10. Device according to Claim 9, **characterized in that** the planet carrier rotary drive device is switched off according to a step function.

11. Device according to Claim 9, **characterized in that** the planet carrier rotary drive device is switched off according to a continuous function.

12. Method for dynamically screwing components, in particular of bearing and transmission units, using the device according to one of Claims 1 to 11, **characterized by** the following method steps:
- before the start of the screwing process, only the sun gear rotary drive device and the torque-switched coupling device are set in operation or are kept in operation,
- at the start of the screwing process, the planet carrier rotary drive device is activated with a first rotational speed,
- in the event of the detection device detecting a rotational movement with a rotational speed above a predefinable threshold value, a final tightening of the screw connection is carried out at a second rotational speed, which is lower than the first rotational speed, of the planet carrier rotary drive device, and the arresting device is activated substantially at the same time, and
- at the end of the screwing process, the arresting device is deactivated and the planet carrier rotary drive device is switched off substantially at the same time.

13. Method according to Claim 12, **characterized in that** the planet carrier rotary drive device is switched off according to a step function.

14. Method according to Claim 12, **characterized in that** the planet carrier rotary drive device is switched off according to a continuous function.

15. Method according to one of Claims 12 to 14, **characterized in that,** at the end of the screwing process, the arresting device is deactivated after a predefinable time or when a certain tightening torque is reached.

16. Method according to one of Claims 12 to 15, **characterized in that** a screw torque is measured directly at the component which is to be screwed.

17. Method according to one of Claims 12 to 16, **characterized in that** a bearing friction torque is measured by means of a bearing friction torque measuring device which is fastened directly or indirectly to the carriage.

18. Method according to Claim 12 to 17, **characterized in that** said method is carried out automatically.

## Revendications

1. Dispositif (10), pour le vissage dynamique de composants, en particulier des unités de paliers et de transmission, avec une transmission à superposition de vitesse de rotation (22), pour faire tourner à des vitesses différentes un élément de liaison par vissage et une partie, à visser avec lui, d'un composant, comprenant deux transmissions planétaires (24, 26) disposées l'une derrière l'autre, avec un porte-satellite (24a, 25a) respectif et des satellites (34, 36 ; 38, 40) respectifs, ainsi qu'une roue solaire (28) commune, un dispositif d'entraînement en rotation de roue solaire susceptible d'être commandé et un dispositif d'entraînement en rotation de porte-satellite susceptible d'être commandé, pour entraîner en rotation l'un des deux porte-satellites (24a, ou 24b), le dispositif d'entraînement en rotation de roue solaire, le dispositif d'entraînement en rotation de porte-satellite et la transmission à superposition de vitesse de rotation (22) étant disposés sur un chariot (42) déplaçable, avec une bague de palier (52),
**caractérisé en ce que**
les deux porte-satellites (24a, 25a) sont montés en palier de façon à pouvoir tourner, et **en ce que** sont prévus
un dispositif d'embrayage, branché quant au couple de rotation, pour assurer l'accouplement de l'autre (24a ou 26a) des deux porte-satellites avec la bague de palier, ainsi qu'un dispositif de détection, pour la détection d'un mouvement rotatif de l'autre (24a ou 26a) des deux porte-satellites, le dispositif d'embrayage étant réalisé sous forme d'unité combinée, avec un dispositif de blocage susceptible d'être commandé, pour bloquer l'autre (24a ou 26a) des deux porte-satellites, lors de la détection, par le dispositif de détection, d'un mouvement rotatif ayant une vitesse de rotation supérieure à une valeur seuil susceptible d'être fixée préalablement.

2. Dispositif selon la revendication 1, **caractérisé en ce que** le dispositif d'embrayage présente au moins un élément à friction.

3. Dispositif selon la revendication 2, **caractérisé en ce que** le ou les élément(s) à friction est/sont réglable(s) de façon sélectionnable, du point de vue de la force d'embrayage.

4. Dispositif selon l'une des revendications précédentes, **caractérisé en ce que** le dispositif de détection est réalisé pour détecter sans contact un mouvement rotatif.

5. Dispositif selon l'une des revendications précédentes, **caractérisé en ce que** le dispositif de blocage présente au moins un élément de freinage.

6. Dispositif selon la revendication 5, **caractérisé en ce que** le ou les éléments à friction est ou sont réalisé(s) pour pouvoir être utilisés également en tant d'élément de freinage, ou d'éléments de freinage du dispositif de blocage.

7. Dispositif selon l'une des revendications précédentes, **caractérisé en ce qu'**un dispositif de mesure du couple de vissage est prévu, pour mesurer un couple de vissage, directement sur le composant à visser.

8. Dispositif selon l'une des revendications précédentes, **caractérisé en ce qu'**un dispositif de mesure du couple de friction de palier, fixé directement ou indirectement au chariot (42), est prévu, pour la mesure du couple de friction du montage en palier du composant.

9. Dispositif selon l'une des revendications précédentes, **caractérisé en ce qu'**est prévu un dispositif de commande, réalisé pour faire fonctionner le dispositif, de manière que, avant le début d'un processus de vissage, seul le dispositif d'entraînement en rotation de roue solaire et le dispositif d'embrayage soient en fonctionnement, que, au début du processus de vissage, le dispositif d'entraînement en rotation de porte-satellite soit connecté, à une première vitesse de rotation, que, lors de la détection, par le dispositif de détection, d'un mouvement rotatif ayant une vitesse de rotation supérieure à une valeur seuil susceptible d'être prédéterminée, la vitesse de rotation du dispositif d'entraînement en rotation de porte-satellite soit abaissée à une deuxième vitesse de rotation, inférieure à la première vitesse de rotation, pour effectuer le serrage final de l'élément de liaison par vissage et que, sensiblement simultanément, le dispositif de blocage soit activé, et que, à la fin du processus de vissage, le dispositif de blocage soit désactivé, et que le dispositif d'entraînement en rotation de porte-satellite soit mis hors service sensiblement simultanément.

10. Dispositif selon la revendication 9, **caractérisé en ce que** le dispositif d'entraînement en rotation de porte-satellite est mis hors service de manière correspondante à une fonction à échelons.

11. Dispositif selon la revendication 9, **caractérisé en ce que** le dispositif d'entraînement en rotation de porte-satellite est mis hors service de manière correspondante à une fonction continue.

12. Procédé pour le vissage dynamique de composants, en particulier des unités de paliers et de transmission, avec utilisation du dispositif selon l'une des revendications 1 à 11, **caractérisé par** les étapes de procédé suivantes :
- avant le début du processus de vissage, seul le dispositif d'entraînement en rotation de roue solaire et le dispositif d'embrayage, branché quant au couple de rotation, sont mis en fonctionnement ou maintenus en fonctionnement,
- au début du processus de vissage, le dispositif d'entraînement en rotation de porte-satellite est connecté, à une première vitesse de rotation,
- lors de la détection, par le dispositif de détection, d'un mouvement rotatif ayant une vitesse de rotation supérieure à une valeur seuil susceptible d'être prédéterminée, un serrage final de la liaison par vissage est effectué, à une deuxième vitesse de rotation, inférieure à la première vitesse de rotation, du dispositif d'entraînement en rotation de porte-satellite, et le dispositif de blocage est activé sensiblement simultanément, et
- à la fin du processus de vissage, le dispositif de blocage est désactivé, et le dispositif d'entraînement en rotation de porte-satellite est mis hors service sensiblement simultanément.

13. Procédé selon la revendication 12, **caractérisé en ce que** le dispositif d'entraînement en rotation de porte-satellite est mis hors service de manière correspondante à une fonction à échelons.

14. Procédé selon la revendication 12, **caractérisé en ce que** le dispositif d'entraînement en rotation de porte-satellite est mis hors service de manière correspondante à une fonction continue.

15. Procédé selon l'une des revendications 12 à 14, **caractérisé en ce que**, à la fin du processus de vissage, le dispositif de blocage est désactivé, après expiration d'une durée susceptible d'être prédéterminée ou à l'atteinte d'un couple de serrage déterminé.

16. Procédé selon l'une des revendications 12 à 15, **caractérisé en ce qu'**un couple de vissage est mesuré, directement sur le composant à visser.

17. Procédé selon l'une des revendications 12 à 16, **caractérisé en ce qu'**un couple de friction du montage en palier du composant est mesuré, au moyen d'un dispositif de mesure du couple de friction de palier, fixé directement ou indirectement au chariot.

18. Procédé selon l'une des revendications 12 à 17, **caractérisé en ce qu'**il est exécuté automatiquement.
